# EUROPÄISCHE PATENTSCHRIFT

(11) **EP 1 866 558 B1**
(45) Veröffentlichungstag und Bekanntmachung des Hinweises auf die Patenterteilung: **11.03.2009**
(21) Anmeldenummer: 06725461.5
(22) Anmeldetag: 31.03.2006
(51) Int. Cl.: F16H 61/30

(54) **AUTOMATISIERTES GETRIEBE EINES KRAFTFAHRZEUGS MIT SCHALTMODUL**
AUTOMATED GEARBOX OF A MOTOR VEHICLE WITH SHIFTING MODULE
BOITE DE VITESSES AUTOMATISEE D'UN VEHICULE A MOTEUR AVEC MODULE DE CHANGEMENT DE VITESSES

(30) Priorität: 05.04.2005 DE 102005015482
(43) Veröffentlichungstag der Anmeldung: 19.12.2007
(73) Patentinhaber: Daimler AG, 70327 Stuttgart (DE)
(72) Erfinder: SCHNITZER, Detlef, 73770 Denkendorf (DE)
(86) Internationale Anmeldenummer: PCT/EP2006/061213
(87) Internationale Veröffentlichungsnummer: WO 2006/106074

(56) Entgegenhaltungen:
- EP-A- 0 802 356
- EP-A- 1 134 112
- WO-A-20/05037590
- DE-A1- 2 065 369
- DE-A1- 19 826 068
- DE-A1-4102004 002 06
- FR-A- 2 798 179
- GB-A- 681 289
- GB-A- 1 061 175
- US-A- 4 625 840
- US-A1- 2003 010 590

## Beschreibung

Die Erfindung betrifft ein automatisiertes Getriebe eines Kraftfahrzeugs mit den Merkmalen des Oberbegriffs des Patentanspruchs 1.

Die DE 697 11 286 T2 beschreibt eine Schalteinrichtung für ein Getriebe eines Kraftfahrzeugs, bei welchem Schaltelemente einer Nebengruppe des Getriebes mittels elektromagnetisch betätigbaren Ventilen in Form von Magnetventilen ansteuerbar sind. Ein Schaltelement wird von einer Schaltstange betätigt, welche mit einem Kolben einer Kolben-Zylinder-Einheit verbunden ist. Ein Magnetventil kann durch Zu- oder Abführen von Fluid in Form von Druckluft zu der Kolben-Zylinder-Einheit den Kolben und damit die Schaltstange bewegen. Die Schalteinrichtung weist ein Schaltmodul auf, welches mehrere Kolben-Zylinder-Einheiten umfasst. Ein Hauptgetriebe wird mittels eines vom Fahrzeugführer betätigbaren Schalthebels geschaltet.

Die DE 100 49 459 A1 beschreibt der Aufbau und die Arbeitsweise eines zentralen Kupplungsausrückers.

Die US 4 625 840 beschreibt eine hydraulische Steuereinheit, für ein automatisiertes Getriebe eines Kraftfahrtzeugs. Alle Komponenten der Steuereinheit sind in einem Gehäuse untergebracht.

Die DE 2 065 369 A1 beschreibt eine Vorrichtung zum Schalten eines automatisierten Getriebes eines Kraftfahrzeugs gemäß dem Oberbegriff des unabhängigen Anspruchs 1. Die Vorrichtung weist Stellzylinder auf, deren Kolben mit Getriebeteilen verbunden sind, die bei einem Gangwechsel bewegt werden.

Die GB 681, 289 und die FR 2 798 179 beschreiben ebenfalls eine Vorrichtung zum Schalten eines automatisierten Getriebes eines Kraftfahrzeugs.

Die nachveröffentlichte WO 2005/037590 beschreibt ein automatisiertes Getriebe eines Kraftfahrzeugs mit einem vorderen Gehäuseteil einem sich an das vordere Gehäuseteil anschließenden mittleren Gehäuseteil und einem Schaltmodul, bei welchem Schaltelemente mittels fluidbetätigten Kolben-Zylindereinheiten betätigbar sind. Im Schaltmodul sind mehrere Kolben-Zylindereinheiten zusammengefasst. Das Schaltmodul verfügt über eine Modulgrundplatte, welche einen Teil der Zylinder der Kolben-Zylindereinheiten und zumindest einen Teil eines zentralen Kupplungsausrückers einer Anfahrkupplung bildet.

Demgegenüber ist es die Aufgabe der Erfindung, ein automatisiertes Getriebes vorzuschlagen, welches einen kostengünstigen Aufbau einer Schalteinrichtung ermöglicht. Erfindungsgemäß wird die Aufgabe durch ein Getriebe mit den Merkmalen des Patentanspruchs 1 gelöst.

Erfindungsgemäß verfügt das automatisierte Getriebe über ein Schaltmodul mit einer Modulgrundplatte, welche einen Teil der Zylinder der Kolben-Zylindereinheiten und zumindest einen Teil eines Gehäuses einer Vorgelegewellenbremse und/oder einen Teil eines zentralen Kupplungsausrückers einer Anfahrkupplung bildet.

Ein zentraler Kupplungsausrücker zeichnet sich dadurch aus, dass ein für das Öffnen und Schließen der Anfahrkupplung notwendiger Druckraum und ein darin geführter Ringkolben um eine Getriebeeingangswelle herum angeordnet sind. Der Druckraum kann mit Betriebsfluid beaufschlagt werden, so dass eine Verschiebung des Ringkolbens zu einer Betätigung der Anfahrkupplung führt.

Die Modulgrundplatte, welche als Gussteil, beispielsweise aus Aluminium, hergestellt werden kann, bildet damit auch Teile der Vorgelegewellenbremse und des zentralen Kupplungsausrückers. Diese Teile müssen nicht separat gefertigt werden, was höhere Kosten verursachen würde. Außerdem ergibt sich damit eine geringe Anzahl verschiedener Bauteile der Schalteinrichtung, was die Montage der Schalteinrichtung vereinfacht und Kosten für Lagerung der Bauteile gering hält.

Mittels der Vorgelegewellenbremse kann eine Vorgelegewelle des Getriebes bei Hochschaltungen abgebremst werden. Die Vorgelegewellenbremse wird ebenfalls mit dem Betriebsfluid betätigt, mittels welchen auch die den Schaltelementen des Getriebes zugeordneten Kolben-Zylindereinheiten betätigbar sind.

Die Anfahrkupplung ist insbesondere zwischen einem Motor und dem Getriebe angeordnet und als automatisierte Reibungskupplung ausgeführt. Der zentrale Kupplungsausrücker der Kupplung wird ebenfalls mit dem genannten Betriebsfluid betätigt. Die Modulgrundplatte bildet insbesondere einen Teil eines Trägerkörpers des zentralen Kupplungsausrückers. Auf dem Trägerkörper wird ein Ringkolben des Kupplungsausrückers beim Öffnen und Schließen der Kupplung geführt.

Das Schaltmodul und die Anfahrkupplung sind in einem vorderen Gehäuseteil und ein Hauptgetriebe des automatisierten Schaltgetriebes ist in einem sich an das vordere Gehäuseteil anschließenden mittleren Gehäuseteil angeordnet. Das vordere Gehäuseteil ist mit dem Motor des Kraftfahrzeugs verbunden, so dass unter vorne die Richtung zum Motor zu verstehen ist. Das Getriebe kann eine so genannte Nachschaltgruppe, welche hinter dem Hauptgetriebe angeordnet ist, aufweisen. In diesem Fall kann das Getriebe zusätzlich über ein hinteres Gehäuseteil verfügen. Die Nachschaltgruppe kann beispielsweise als eine Rangegruppe ausgeführt sein.

Die genannte Aufteilung des Schaltmoduls, der Anfahrkupplung und des Hauptgetriebes in die verschiedenen Gehäuseteile ermöglicht eine besonders einfache und damit kostengünstige Montage des Getriebes.

Das Schaltmodul weist einen Moduldeckel auf. Die Modulgrundplatte, der Moduldeckel und der vordere Gehäuseteil bilden die Zylinder der Kolben-Zylindereinheiten. Der Aufbau der Zylinder aus drei Teilen ermöglicht eine einfache Montage der Kolben-Zylindereinheiten.

In Ausgestaltung der Erfindung sind die Kolben-Zylindereinheiten als symmetrische Dreistellungszylinder ausgeführt. Ein symmetrischer Dreistellungszylinder weist zwei in einem Zylinder geführte Hohlkolben und einen im Hohlkolben angeordneten inneren Kolben auf. Der innere Kolben ist über eine Kolbenstange beispielsweise mit einer Schaltstange des Getriebes verbunden. Bei einem symmetrischen Dreistellungszylinder können drei stabile Stellungen angesteuert werden. Der innere Kolben kann in zwei äußere Stellungen und in eine Mittelstellung gefahren werden. Zur Ansteuerung sind zwei Anschlüsse für Betriebsfluid, beispielsweise Druckluft, auf gegenüberliegenden Seiten der Kolben notwendig. Die wirksamen Kolbenflächen sind für beide Betätigungsrichtungen gleich groß, so dass sich bei einem zur Verfügung stehenden Fluiddruck in beide Betätigungsrichtungen eine gleich hohe Betätigungskraft ergibt. Beim Anfahren der Mittelstellung setzt sich die wirksame Fläche aus den Kolbenflächen eines Hohlkolbens und des inneren Kolbens zusammen. Beim Anfahren einer der äußeren Stellungen besteht die wirksame Fläche hingegen nur aus der Kolbenfläche des inneren Kolbens. Daraus ergibt sich, dass zum Anfahren der Mittelstellung eine höhere Betätigungskraft aufgebracht werden kann, wie zum Anfahren einer äußeren Stellung. Bei der Anwendung des Schaltmoduls in einem unsynchronisierten Zahnräderwechselgetriebe entspricht das Anfahren der Mittelstellung dem Auslegen eines Gangs. Hierzu kann je nach Betriebsbedingungen des Getriebes eine hohe Kraft notwendig sein. Die Verwendung von symmetrischen Dreistellungszylindern ergibt damit ein Schaltmodul, welches besonders vorteilhaft bei unsynchronisierten Zahnräderwechselgetrieben einsetzbar ist.

In Ausgestaltung der Erfindung weisen die Modulgrundplatte und/oder der Moduldeckel Kanäle zur Verteilung des Betriebsfluids auf. Die Kanäle bilden eine Verbindung zwischen einem Anschluss, an dem das Betriebsfluid zugeführt wird, und Versorgungsleitungen von elektromagnetisch betätigbaren Ventilen. Die Modulgrundplatte und/oder der Moduldeckel weisen insbesondere Ausnehmungen zur teilweisen Aufnahme von Ventilen auf, mittels welchen den Kolben-Zylindereinheiten und/oder dem zentralen Kupplungsausrücker und/oder der Vorgelegewellenbremse Betriebsfluid zu- und abgeführt werden kann. Die genannten Kanäle verbinden Verbraucheranschlüsse der Ventile mit den Kolben-Zylindereinheiten, dem Kupplungsausrücker und der Vorgelegewellenbremse. Die Kanäle können bei der Herstellung, beispielsweise beim Gießen, der Modulgrundplatte und/oder des Moduldeckels vorgesehen werden. Damit sind keine separaten Druckleitungen notwendig. Die Anordnung der Ventile in Ausnehmungen der Modulgrundplatte und/oder dem Moduldeckel ermöglichen eine besonders kompakte Bauweise der Schalteinrichtung.

In Ausgestaltung der Erfindung weist die Modulgrundplatte und/oder der Moduldeckel eine Ausnehmung zur teilweisen Aufnahme eines oder mehrerer Ventile auf, mittels welchen einer vom Schaltmodul beabstandet angeordneten Kolben-Zylindereinheit Betriebsfluid zu- und/oder abgeführt werden kann. Dies ermöglicht die Zusammenfassung aller Ventile am Schaltmodul, auch wenn nicht alle Kolben-Zylindereinheiten der Schalteinrichtung im Schaltmodul zusammengefasst sind. Damit ist keine zusätzliche Verkabelung von Spulen zur Betätigung der Ventile notwendig.

Das Schaltmodul weist insbesondere einen Anschluss für eine Fluidleitung auf, welcher mit der Ausnehmung für das Ventil der vom Schaltmodul beabstandet angeordneten Kolben-Zylindereinheit verbunden ist. Über diesen Anschluss kann ein Verbraucheranschluss des genannten Ventils mit der Kolben-Zylindereinheit verbunden werden.

Wie oben beschrieben kann das Getriebe beispielsweise über eine hinter einem Hauptgetriebe angeordnete Nachschaltgruppe verfügen. Eine Kolben-Zylindereinheit zur Betätigung von Schaltelementen der Nachschaltgruppe kann innerhalb eines Gehäuses der Nachschaltgruppe angeordnet sein.

Der Teil der Ventile, die nicht von den Ausnehmungen der Modulgrundplatte und/oder der Moduldeckel aufgenommen werden, ist insbesondere innerhalb einer am Schaltmodul angebrachten Steuerungseinrichtung angeordnet. Die Steuerungseinrichtung umfasst insbesondere die Spulen zur elektromagnetischen Betätigung der Ventile. Die Spulen sind insbesondere gemeinsam auf einer Platine angeordnet, auf welcher auch alle weiteren elektronischen Bauteile wie Prozessor und Speichermodule der Steuerungseinrichtung angeordnet sein können. Damit ist der Aufwand zum elektrischen Verbinden der Spulen sehr gering.

Weitere Vorteile der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. In der Zeichnung zeigen:
- Fig. 1: eine schematische Darstellung eines automatisierten Getriebes,
- Fig. 2: eine Schalteinrichtung eines automatisierten Getriebes,
- Fig. 3: eine Modulgrundplatte eines Schaltmoduls der Schalteinrichtung,
- Fig. 4: ein Druckluftanschluss der Modulgrundplatte,
- Fig. 5: ein Moduldeckel des Schaltmoduls,
- Fig. 6: ein symmetrischer Dreistellungszylinder und
- Fig. 7: einen Ausschnitt der Schalteinrichtung mit einem elektromagnetisch betätigbaren Ventil.

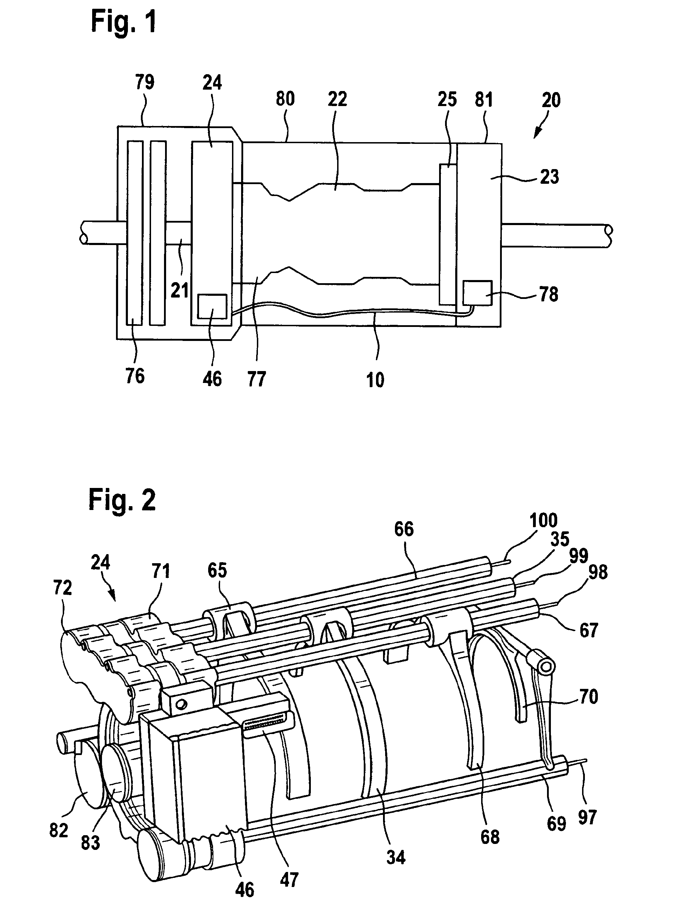

Gemäß Fig. 1 weist ein automatisiertes Getriebe 20, welches als Zahnräderwechselgetriebe in Vorgelegebauweise ausgeführt ist, eine Getriebeeingangswelle 21 auf, welche mittels einer automatisierten Anfahrkupplung 76 mit einem nicht dargestellten Motor verbunden ist. Das Getriebe 20 weist eine Splitgruppe 77, ein Hauptgetriebe 22 und ein nachgeschaltetes Gruppengetriebe 23 in Form einer Rangegruppe auf. Nicht in Fig. 1 dargestellte Schaltelemente des Hauptgetriebes 22 und der Splitgruppe 77 werden von nicht dargestellten Kolben-Zylindereinheiten, welche in einem Schaltmodul 24 zusammengefasst sind, betätigt. Das Schaltmodul 24 ist zwischen Anfahrkupplung 76 und Splitgruppe 77 angeordnet. Ein nicht dargestelltes Schaltelement des Gruppengetriebes 23 wird von einer Kolben-Zylindereinheit 78, welche innerhalb des Gruppengetriebes 23 angeordnet ist, betätigt. Zwischen dem Hauptgetriebe 22 und dem Gruppengetriebe 23 ist ein Sensormodul 25 angeordnet. Das Sensormodul 25 weist nicht dargestellte Sensoren auf, mittels welcher Drehzahlen des Getriebes 20 und Positionen der Schaltelemente erfasst werden können. Weiterhin verfügt das Sensormodul 25 über ein nicht dargestelltes Auswertemodul, welches die erfassten Sensorsignale vorverarbeitet und an eine Steuerungseinrichtung 46 des Getriebes 20 sendet. Die Steuerungseinrichtung 46 ist ebenso wie alle Ventile zur Ansteuerung der Kolben-Zylindereinheiten mit Druckluft am Schaltmodul 24 angeordnet.

Das Schaltmodul 24 ist über eine Verbindungsleitung 10 mit dem Sensormodul 25 und dem Gruppengetriebe 23 verbunden. Die Verbindungsleitung 10 weist dazu Fluidleitungen und elektrische Leitungen auf. Mittels eines Teils der elektrischen Leitungen wird das Sensormodul 25 mit Spannung versorgt. Über weitere elektrische Leitungen sendet das Auswertemodul die vorverarbeiteten Sensorsignale an die Steuerungseinrichtung 46. Dies kann beispielsweise mittels eines an sich bekannten CAN-Protokolls erfolgen. Mittels der Fluidleitungen sind dem Gruppengetriebe 23 zugeordnete Ventile, welche ebenfalls im Schaltmodul 24 angeordnet sind, mit der Kolben-Zylindereinheit 78 in der Nachschaltgruppe 23 verbunden.

Die verschiedenen Elemente des Getriebes 20 sind in drei Gehäuseteilen angeordnet, welche zusammen ein Gehäuse des Getriebes 20 bilden. Die Anfahrkupplung 76 und das Schaltmodul 24 sind in einem vorderen Gehäuseteil 79 angeordnet, welches mit dem Motor verbunden ist. An das vordere Gehäuseteil 79 schließt sich ein mittleres Gehäuseteil 80 an, in welchem die Splitgruppe 77, das Hauptgetriebe 22 und das Sensormodul 25 angeordnet sind. Das Gehäuse des Getriebes 20 wird durch ein hinteres Gehäuseteil 81 abgeschlossen, welches das nachgeschaltete Gruppengetriebe 23 beinhaltet.

Gemäß Fig. 2 sind Schaltelemente des automatisierten Getriebes 20 in Form von Schaltgabeln 34, 65, 68 und 70 mit Schaltstangen 35, 66, 67 und 69 verbunden. Bei einer Bewegung der Schaltstangen 35, 66, 67 und 69 werden auch die Schaltgabeln 34, 65, 68 und 70 bewegt. Mittels der Schaltgabel 65 kann die Splitgruppe 77, mit den Schaltgabeln 34 und 68 Vorwärtsgänge des Hauptgetriebes 22 und mit der Schaltgabel 70 ein Rückwärtsgang des Hauptgetriebes 22 geschaltet werden.

Die Schaltstangen 35, 66, 67 und 69 sind mit Kolben von in der Fig. 2 nicht dargestellten Kolben-Zylindereinheiten verbunden, so dass eine Bewegung der Kolben auf die Schaltstangen 35, 66, 67 und 69 und damit auf die Schaltgabeln 34, 65, 68 und 70 übertragen wird. Die Kolben-Zylindereinheiten sind in einem Schaltmodul 24 angeordnet, welches eine Modulgrundplatte 71 und einen Moduldeckel 72 aufweist.

Am Schaltmodul 24 ist die elektronische Steuerungseinrichtung 46 angeordnet, welche über einen Getriebestecker 47 mit Spannung versorgt und mit anderen Steuerungseinrichtungen des Kraftfahrzeugs verbunden werden kann.

Die Schaltstangen 35, 66, 67 und 69 weisen an ihren dem Schaltmodul abgewandten Ende Sensorstifte 99, 100, 98 und 97 auf. Die Sensorstifte 99, 100, 98 und 97 sind als dünne Stifte ausgeführt, welche koaxial zu den Schaltstangen 35, 66, 67 und 69 verlaufen. Die Sensorstifte 99, 100, 98 und 97 tauchen in nicht dargestellte Sensoren, in so genannte Sensorspulen ein, welche am Sensormodul 25 angeordnet sind. Damit ist es möglich, die Position der Schaltstangen 35, 66, 67 und 69 zu messen.

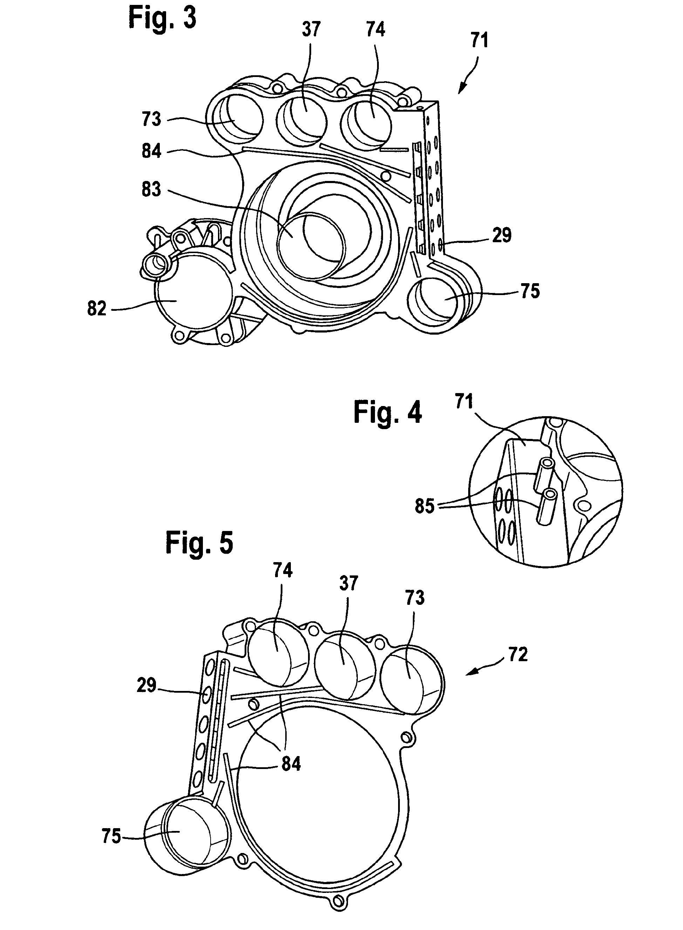

Gemäß Fig. 3 bildet der Modulgrundkörper 71 des Schaltmoduls 24 einen Teil der Zylinder der Kolben-Zylindereinheiten 37, 73, 74 und 75, welche zur Betätigung der Schaltstangen 35, 66, 67 und 69 vorgesehen sind. Der Modulgrundkörper 71 bildet außerdem ein Gehäuse 82 einer Vorgelegewellenbremse und einen Teil eines Trägerkörpers 83 eines zentralen Kupplungsausrückers. Der Trägerkörper 83 weist dabei im wesentlichen die Form eines Hohlzylinders auf. Die Vorgelegewellenbremse und der Kupplungsausrücker werden ebenfalls mittels Druckluft betätigt.

Der Modulgrundkörper 71 weist hauptsächlich zylinderförmige Ausnehmungen 29 auf, welche elektromagnetisch betätigbare Ventile teilweise aufnehmen können. Mittels der Ventile kann den Kolben-Zylindereinheiten, dem Kupplungsausrücker und der Vorgelegewellenbremse Druckluft zugeführt oder Druck abgebaut werden. Dazu sind im Modulgrundkörper 71 Kanäle 84 enthalten, welche die Kolben-Zylindereinheiten, die Vorgelegewellenbremse und den Kupplungsausrücker mit den ihnen zugeordneten Ventilen verbinden.

Die Ventile zur Ansteuerung der Kolben-Zylindereinheit 78 werden mittels der Fluidleitungen der Verbindungsleitung 10 mit der Kolben-Zylindereinheit 78 verbunden. Dazu weist der Modulgrundkörper 71 Anschlüsse 85 auf. Die Anschlüsse 85 sind gemäß Fig. 4 als kurze Hohlzylinder ausgeführt, welche mit den zugehörigen Ausnehmungen 49 verbunden sind.

Gemäß Fig. 5 bildet der Moduldeckel 72 des Schaltmoduls 24 ebenfalls einen Teil der Zylinder der Kolben-Zylindereinheiten 37, 73, 74 und 75. Außerdem weist der Moduldeckel 72 weitere hauptsächlich zylinderförmige Ausnehmungen 29 auf, welche Ventile teilweise aufnehmen können. Zur Verteilung der Druckluft verfügt der Moduldeckel ebenfalls über Kanäle 84.

Der Modulgrundkörper 71 und der Moduldeckel 72 sind als Aluminium Gussteile ausgeführt.

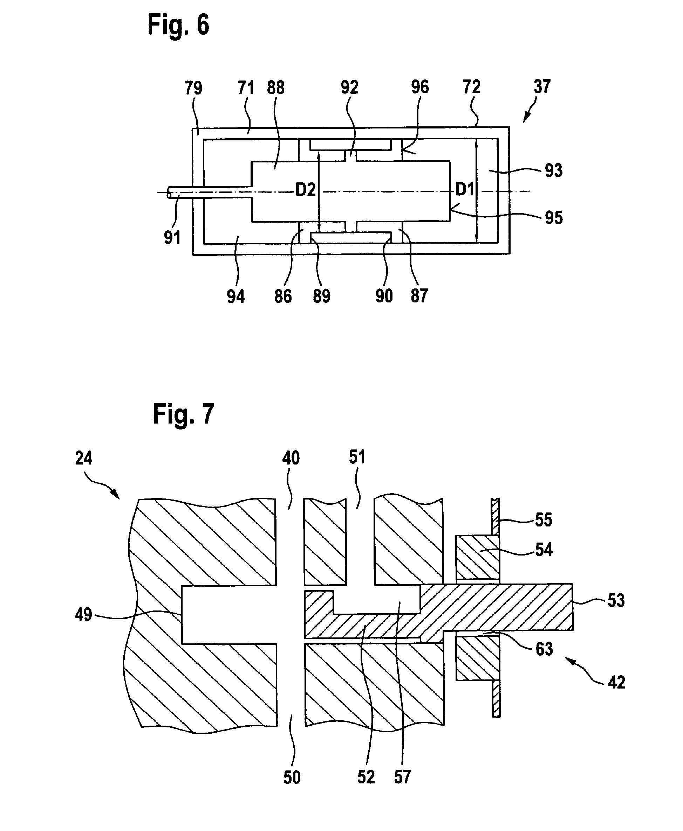

Der Moduldeckel 72 und der Modulgrundkörper 71 sind so am vorderen Gehäuseteil 79 in Richtung Splitgruppe 77 verschraubt, dass sie gemeinsam die Zylinder der Kolben-Zylindereinheiten 37, 73, 74 und 75 bilden. In Fig. 6 ist beispielhaft die Kolben-Zylindereinheit 37 schematisch dargestellt. Innerhalb des Zylinders sind zwei Hohlkolben 86 und 87 angeordnet. Die Hohlkolben 86 und 87 weisen jeweils zwei unterschiedliche Durchmesser D1, D2 auf, wobei sie so innerhalb des Zylinders angeordnet sind, dass jeweils der kleinere Durchmesser D2 axial nach innen gerichtet ist. Der Zylinder weist zu den Durchmessern D1, D2 der Hohlkolben 86 und 87 korrespondierende Durchmesser auf, so dass sich für den rechten Hohlzylinder 87 ein Anschlag 90 axial nach links und für den linken Hohlzylinder 86 ein Anschlag 89 axial nach rechts ergibt. Innerhalb der Hohlkolben 86 und 87 ist verschieblich ein innerer Kolben 88 angeordnet, der mit einer Kolbenstange 91 fest verbunden ist. Die Kolbenstange 91 ist wiederum mit der Schaltstange 35 verbunden, so dass sich bei einer Verschiebung des Kolbens 88 innerhalb des Zylinders auch die Schaltstange 35 verschiebt.

Der Kolben 88 weist einen Bund 92 auf, der einen dem kleineren Durchmesser D2 der Hohlkolben 86 und 87 entsprechenden Durchmesser aufweist. Der Kolben 88 ist so angeordnet, dass der Bund 92 zwischen den Hohlkolben 86 und 87 liegt.

Der Moduldeckel 72, der Kolben 88 und der Hohlkolben 87 bilden einen rechten Druckraum 93 und der Modulkörper 71, das vordere Gehäuseteil 79, der Kolben 88 und der Hohlkolben 86 einen linken Druckraum 94. Die Druckräume 93 und 94 sind mit in der Fig. 6 nicht dargestellten Kanälen 84 mit ihnen zugeordneten Ventilen verbunden. Damit können die Druckräume 93 und 94 mit Druck beaufschlagt, also belüftet oder drucklos gemacht, also entlüftet werden.

Wird in der dargestellten Mittelstellung des Kolbens 88 der rechte Druckraum 93 belüftet und der linke Druckraum 94 entlüftet, so wird der Kolben 88 und der Hohlkolben 86 so weit nach links verschoben, bis der Kolben 88 am vorderen Gehäuseteil 79 anstößt. Der Hohlkolben 87 bleibt in der dargestellten Position. Die dabei auf die Kolbenstange 91 wirkende Kraft ergibt sich aus dem Druck im Druckraum 93 und der Kolbenfläche 95 des Kolbens 88.

Soll nun der Kolben 88 wieder nach rechts bewegt werden, so wird der linke Druckraum 94 belüftet und der Druckraum 93 entlüftet. Der Kolben 88 und der Hohlkolben 86 bewegen sich damit nach rechts. Der Hohlkolben 86 bewegt sich so weit nach rechts, bis er am Anschlag 89 des Zylinders anstößt. Der Kolben 88 bewegt sich weiter, bis die Kolbenfläche 95 am Moduldeckel 72 anstößt.

Die dabei auf die Kolbenstange 91 wirkende Kraft ergibt sich für den ersten Teil der Bewegung, bei dem auch der Hohlkolben 86 bewegt wird, aus dem Druck im Druckraum 94 und der Summe aus der Kolbenfläche 95 des Kolbens 88 und der Kolbenfläche 96 des Hohlkolbens 86. Die Kraft ist damit größer als die Kraft beim Ausschieben des Kolbens 88 und stehendem Hohlkolben 87. Sobald der Hohlkolben 86 steht, entspricht die Bewegung des Kolbens 88 der beschriebenen Bewegung des Kolbens nach links. Die Kraft sinkt also ebenfalls ab.

Soll die dargestellte Mittelstellung des Kolbens eingestellt werden, so muss die Bewegung des Kolbens 88 nach rechts durch rechtzeitige Belüftung der Druckkammer 93 abgebremst werden. Die Mittelstellung wird gehalten, wenn beide Druckräume 93 und 94 belüftet sind.

Da die Kolben-Zylindereinheit 37 drei stabile Stellungen aufweist und die aufgebrachte Kraft in beide Betätigungsrichtungen gleich groß ist, wird eine derartige Kolben-Zylindereinheit als symmetrischer Dreistellungszylinder bezeichnet. Es ist aber auch möglich, einen asymmetrischen Dreistellungszylinder zu verwenden, bei dem die in die beiden Betätigungsrichtungen wirkenden Kräfte unterschiedlich hoch sind.

In Fig. 7 ist beispielhaft für die Anordnung aller Ventile die Anordnung eines Ventils 42 im Schaltmodul 24 und der Steuerungseinrichtung 46 dargestellt. Gemäß Fig. 7 weist das Schaltmodul 24 eine hauptsächlich zylindrische Ausnehmung 49 auf, welche einen Teil des Ventils 42 aufnimmt. Das Schaltmodul 24 weist einen Nullabfluss 50 zur Umgebung auf, der fluchtend zu einer Druckleitung 40, welche als Verbraucheranschluss des Ventils 42 dient, angeordnet ist. Die Druckleitung 40 ist über einen Kanal 84 mit einem Druckraum einer Kolben-Zylindereinheit verbunden. Die Druckleitung 40 und der Nullabfluss 50 sind durch die Ausnehmung 49 getrennt. Außerdem weist das Schaltmodul 24 eine parallel zur Druckleitung 40 angeordnete Versorgungsleitung 51 auf, welche mit einem Druckluftanschluss verbunden ist. Über den Druckluftanschluss wird die Schalteinrichtung mit Druckluft versorgt. Die Versorgungsleitung 51 mündet ebenfalls in die Ausnehmung 49. Das Ventil 42 weist einen innerhalb der Ausnehmung 49 verschiebbaren, zylinderförmigen Kolben 52 auf. Der dem Kolben 52 entgegen liegende Teil 53 des Ventils 42 ist in der Steuerungseinrichtung 46 angeordnet. Ein Abschnitt des Teils 53 des Ventils 42 wird von einer elektromagnetischen Spule 54, welche auf einer Platine 55 der Steuerungseinrichtung 46 angeordnet ist, umschlossen. Ein von der Spule 54 gebildeter Hohlraum 63 stellt damit eine Ausnehmung der Steuerungseinrichtung 46 dar, die einen Teil des Ventils 42 aufnimmt. Durch eine entsprechende elektrische Ansteuerung der Spule 54 kann der Kolben 52 des Ventils 42 in der Ausnehmung 49 des Schaltmoduls 24 verschoben werden. Das Ventil 42 ist vollständig innerhalb der Steuerungseinrichtung 46 (nicht in Fig. 7 dargestellt) angeordnet.

In der dargestellten komplett eingefahrenen Stellung des Kolbens 52, wird die Spule 54 nicht mit Strom beaufschlagt. Die dargestellte Position stellt damit eine Ruheposition des Ventils 42 dar. In dieser Ruheposition ist die Druckleitung 40 mit dem Nullabfluss 50 über die Ausnehmung 49 verbunden. Der Druckraum 38 der Kolben-Zylinder-Einheit 37 ist damit drucklos. Durch entsprechende Ansteuerung der Spule 54 kann der Kolben 52 so weit in Richtung Druckleitung 40 verschoben werden, dass die Druckleitung 40 vom Kolben 52 abgeschlossen wird. In dieser Stellung wird ein momentan herrschender Druck in der Druckleitung 40 beibehalten. Wird der Kolben 52 durch entsprechende Ansteuerung noch weiter verschoben, so wird die Versorgungsleitung 51 über eine Ausnehmung 57 des Kolbens 52 mit der Druckleitung 40 verbunden. In dieser Stellung wird dem Druckraum der Kolben-Zylindereinheit Druckluft zugeführt, der Druckraum wird also belüftet.

Die Schalteinrichtung weist insgesamt 15 Ventile auf, wobei 10 Ventile in der Modulgrundplatte 71 und 5 Ventile im Moduldeckel 72 angeordnet sind. Jeder der 5 Kolben-Zylindereinheiten 37, 73, 74, 75, 78 zur Betätigung der Schaltstangen 35, 66, 67 und 69 und des Gruppengetriebes 23 weist zwei Druckräume auf, denen jeweils ein Ventil zugeordnet ist. Zur Betätigung des Kupplungsausrückers sind 4 und für die Vorgelegewellenbremse ist ein Ventil notwendig.

## Patentansprüche

1. Automatisiertes Getriebe eines Kraftfahrzeugs, mit einem Schaltmodul (24), bei welchem Schaltelemente (34, 65, 68, 70) mittels fluidbetätigten Kolben-Zylindereinheiten (37, 73, 74, 75, 78) betätigbar sind, wobei in dem Schaltmodul (24) mehrere Kolben-Zylindereinheiten (37, 73, 74, 75) zusammengefasst sind und das Schaltmodul (24) über eine Modulgrundplatte (71) verfügt, welche einen Teil der Zylinder der Kolben-Zylindereinheiten (37, 73, 74, 75) und zumindest einen Teil eines Gehäuses (82) einer Vorgelegewellenbremse und/oder einen Teil eines zentralen Kupplungsausrückers (83) einer Anfahrkupplung (76) bildet,
**gekennzeichnet durch**,
ein vorderes Gehäuseteil (79) und ein sich an das vordere Gehäuseteil (79) anschließendes mittleres Gehäuseteil (80), wobei
- das Schaltmodul (24) und die Anfahrkupplung (76) im vorderen Gehäuseteil (79) angeordnet sind,
- ein Hauptgetriebe (22) des automatisierten Getriebes (20) im mittleren Gehäuseteil (80) angeordnet ist,
- das Schaltmodul (24) einen Moduldeckel (72) aufweist und
- die Modulgrundplatte (71), der Moduldeckel (72) und der vordere Gehäuseteil (79) die Zylinder der Kolben-Zylindereinheiten (37, 73, 74, 75) bilden.

2. Automatisiertes Getriebe nach Anspruch 1,
**dadurch gekennzeichnet, dass**
die Modulgrundplatte (71) des Schaltmoduls (24) zumindest einen Teil eines Trägerkörpers (83) des zentralen Kupplungsausrückers bildet.

3. Automatisiertes Getriebe nach einem der vorhergehenden Ansprüche,
**dadurch gekennzeichnet, dass**
die Kolben-Zylindereinheiten (37, 73, 74, 75) des Schaltmoduls (24) als symmetrische Dreistellungszylinder ausgeführt sind.

4. Automatisiertes Getriebe nach einem der vorhergehenden Ansprüche,
**dadurch gekennzeichnet, dass**
die Modulgrundplatte (71) und/oder der Moduldeckel (72) des Schaltmoduls (24) Kanäle (84) zur Verteilung des Betriebsfluids aufweisen.

5. Automatisiertes Getriebe nach einem der vorhergehenden Ansprüche,
**dadurch gekennzeichnet, dass**
die Modulgrundplatte (71) und/oder der Moduldeckel (72) des Schaltmoduls (24) Ausnehmungen (49) zur teilweisen Aufnahme von Ventilen (42) aufweisen, mittels welchen den Kolben-Zylindereinheiten (37, 73, 74, 75, 78) und/oder dem zentralen Kupplungsausrücker und/oder der Vorgelegewellenbremse Betriebsfluid zu- und abgeführt werden kann.

6. Automatisiertes Getriebe nach Anspruch 5,
**dadurch gekennzeichnet, dass**
die Modulgrundplatte (71) und/oder der Moduldeckel (72) des Schaltmoduls (24) eine Ausnehmung (49) zur Aufnahme eines Teils eines Ventils (42) aufweist, mittels welchem einer vom Schaltmodul (24) beabstandet angeordneten Kolben-Zylindereinheit (78) Betriebsfluid zu- und/oder abgeführt werden kann.

7. Automatisiertes Getriebe nach Anspruch 6,
**dadurch gekennzeichnet, dass**
das Schaltmodul (24) einen Anschluss (85) für eine Fluidleitung (10) aufweist, welcher mit der Ausnehmung (49) für das Ventil (42) der vom Schaltmodul (24) beabstandet angeordneten Kolben-Zylindereinheit (78) verbunden ist.

## Claims

1. Automated gearbox of a motor vehicle, with a shifting module (24) wherein shifting components (34, 65, 68, 70) are operable by means of fluid-operated piston/cylinder units (37, 73, 74, 75, 78), wherein a plurality of piston/cylinder units (37, 73, 74, 75) are combined in the shifting module (24) and the shifting module (24) is provided with a module base plate (71) forming a part of the cylinders of the piston/cylinder units (37, 73, 74, 75) and at least a part of a housing (82) of a layshaft brake and/or a part of a central clutch release unit (83) of a starting clutch (76),
**characterised by**
a front housing part (79) and a middle housing part (80) adjoining the front housing part (79), wherein
- the shifting module (24) and the starting clutch (76) are located in the front housing part (79),
- the main gearbox (22) of the automated gearbox (20) is located in the middle housing part (80),
- the shifting module (24) has a module cover (72) and
- the module base plate (71), the module cover (72) and the front housing part (79) form the cylinders of the piston/cylinder units (37, 73, 74, 75).

2. Automated gearbox according to claim 1,
**characterised in that**
the module base plate (71) of the shifting module (24) forms at least a part of a support body (83) of the central clutch release unit.

3. Automated gearbox according to any of the preceding claims,
**characterised in that**
the piston/cylinder units (37, 73, 74, 75) of the shifting module (24) are designed as symmetrical three-position cylinders.

4. Automated gearbox according to any of the preceding claims,
**characterised in that**
the module base plate (71) and/or the module cover (72) of the shifting module (24) are provided with passages (84) for the distribution of the operating fluid.

5. Automated gearbox according to any of the preceding claims,
**characterised in that**
the module base plate (71) and/or the module cover (72) of the shifting module (24) are provided with recesses (49) for the partial accommodation of valves (42), by means of which operating fluid can be supplied to and removed from the piston/cylinder units (37, 73, 74, 75, 78) and/or the central clutch release unit and/or the layshaft brake.

6. Automated gearbox according to claim 5,
**characterised in that**
the module base plate (71) and/or the module cover (72) of the shifting module (24) are provided with a recess (49) for the accommodation of a part of a valve (42), by means of which operating fluid can be supplied to and removed from a piston/cylinder unit (78) arranged at a distance from the shifting module (24).

7. Automated gearbox according to claim 6,
**characterised in that**
the switching module (24) comprises a connection (85) for a fluid line (10), which is connected to the recess (49) for the valve (42) of the piston/cylinder unit (78) arranged at a distance from the shifting module (24).

## Revendications

1. Boite de vitesses automatisée d'un véhicule automobile, comprenant un module de changement de vitesse (24) dans lequel des éléments de commande (34, 65, 68, 70) peuvent être actionnés au moyen d'unités à piston-cylindre (37, 73, 74, 75, 78) actionnées par fluide, plusieurs unités à piston-cylindre (37, 73, 74, 75) étant regroupées dans le module de changement de vitesse (24), et le module de changement de vitesse (24) disposant d'une plaque de base de module (71) qui forme une partie des cylindres des unités à piston-cylindre (37, 73, 74, 75) et au moins une partie d'un carter (82) d'un frein d'arbre de transmission intermédiaire et/ou une partie d'un dispositif de débrayage central (83) d'un embrayage de démarrage (76),
**caractérisée par**
une partie de carter avant (79) et une partie de carter centrale (80) qui se raccorde à la partie de carter avant (79), l'ensemble étant tel que
- le module de changement de vitesse (24) et l'embrayage de démarrage (76) sont agencés dans la partie de carter avant (79),
- une transmission principale de boite de vitesses (22) de la boite de vitesses automatisée (20) est agencée dans la partie de carter centrale (80),
- le module de changement de vitesses (24) comporte un couvercle de module (72), et
- la plaque de base de module (71), le couvercle de module (72) et la partie de carter avant (79) forment les cylindres des unités à piston-cylindre (37, 73, 74, 75).

2. Boite de vitesses automatisée selon la revendication 1, **caractérisée en ce que** la plaque de base de module (71) du module de changement de vitesse (24) forme au moins une partie d'un corps de support (83) du dispositif de débrayage central.

3. Boite de vitesses automatisée selon l'une des revendications précédentes, **caractérisée en ce que** les unités à piston-cylindre (37, 73, 74, 75) du module de changement de vitesse (24) sont réalisées sous forme de vérins ou cylindres à trois positions, symétriques.

4. Boite de vitesses automatisée selon l'une des revendications précédentes, **caractérisée en ce que** la plaque de base de module (71) et/ou le couvercle de module (72) du module de changement de vitesse (24) comportent des canaux (84) pour la distribution du fluide de fonctionnement.

5. Boite de vitesses automatisée selon l'une des revendications précédentes, **caractérisée en ce que** la plaque de base de module (71) et/ou le couvercle de module (72) du module de changement de vitesse (24) présentent des évidements (49) destinés à recevoir partiellement des vannes (42) au moyen desquelles du fluide de fonctionnement peut être amené aux unités à piston-cylindre (37, 73, 74, 75, 78) et/ou au dispositif de débrayage central et/ou au frein d'arbre de transmission intermédiaire, et être évacué de ceux-ci.

6. Boite de vitesses automatisée selon la revendication 5, **caractérisée en ce que** la plaque de base de module (71) et/ou le couvercle de module (72) du module de changement de vitesse (24) présentent un évidement (49) destiné à recevoir une partie d'une vanne (42), au moyen de laquelle du fluide de fonctionnement peut être amené à une unité à piston-cylindre (78) agencée à distance du module de changement de vitesse (24), et/ou être évacué de celle-ci.

7. Boite de vitesses automatisée selon la revendication 6, **caractérisée en ce que** le module de changement de vitesse (24) présente un raccord de branchement (85) pour une conduite de fluide (10), qui est relié à l'évidement (49) pour la vanne (42) de l'unité à piston-cylindre (78) agencée à distance du module de changement de vitesse (24).
